# EUROPÄISCHE PATENTSCHRIFT

(11) **EP 2 821 169 B1**
(45) Veröffentlichungstag und Bekanntmachung des Hinweises auf die Patenterteilung: **29.03.2017**
(21) Anmeldenummer: 13175252.9
(22) Anmeldetag: 05.07.2013
(51) Int. Cl.: B23B 31/00, B23B 31/16, B23B 31/177

(54) **Kraftspannfutter**
Power chuck
Mandrin mécanique

(43) Veröffentlichungstag der Anmeldung: 07.01.2015
(73) Patentinhaber: D'Ancona, Ricardo, 13.280-000 Vinhedo (BR)
(72) Erfinder: D'Ancona, Ricardo, 13.280-000 Vinhedo (BR)
(74) Vertreter: Engelhardt & Engelhardt

(56) Entgegenhaltungen:
- WO-A1-99/41032
- FR-A- 1 256 940
- US-A1- 2008 018 060
- US-B1- 6 299 179

## Beschreibung

Die Erfindung bezieht sich auf ein Kraftspannfutter mit in einen Futterkörper in radial gerichteten Führungsnuten verschiebbar eingesetzte Spann- oder Grundbacken, die über Keilhaken oder Keilstangen durch einen z.B. mit einer axial verschiebbare Zugstange verbundenen Verstellkolben betätigbar sind, wobei der Futterkörper des Kraftspannfutters im Bereich der Führungsnuten oder die Spann- oder Grundbacken in den an die Führungsnuten angrenzen Bereichen jeweils mit einer umlaufenden Aufnahmenut versehen sind und in die Aufnahmenuten je eine endlos ausgebildete Dichtung eingesetzt ist, derart, dass von dieser ein Aufnahmeraum eingeschlossen ist.

Ein Kraftspannfutter gemäß dem Oberbegriff des Anspruchs 1 ist aus US 2008/018060 A1 bekannt. Mittels derartiger Kraftspannfutter, die z.B. durch die US 2008/018060 A1 sowie die FR 1 256 940 A bekannt sind und sich in der Praxis bewährt haben, werden auf einer Drehmaschine Werkstücke unterschiedlicher Formgebung eingespannt. Bei der Bearbeitung eines Werkstückes können jedoch Verunreinigungen, wie z.B. Späne und Staubkörner, in den Futterkörper eindringen und auf die Führungs- und Stützflächen gelangen. Bereits nach kurzen Einsatzzeiten kann dies durch eine dadurch bedingten Erhöhung der Reibung zwischen Futterkörper und Spannbacken zu einer erheblichen Minderung der Spannkraft führen, so dass ein Werkstück nicht mehr sicher eingespannt ist und mitunter aus dem Futterkörper geschleudert werden kann. Um diesen Unwägbarkeiten zu begegnen, ist ein hoher Wartungsaufwand erforderlich, in dem das Kraftspannfutter in regelmäßigen Abständen abgebaut, zerlegt, gereinigt und vor einem erneuten Anbau an die Werkzeugmaschine eingefettet wird. Dabei sind somit große Produktionsausfälle in Kauf zu nehmen.

Bei den bekannten Spannfuttern sind die Aufnahmenuten, in die jeweils eine umlaufende ausgebildete Dichtung eingelegt ist, lediglich in der Stirnfläche einer in den Futterkörper eingesetzten Scheibe, in die auch die Führungsnuten für die Spannbacken eingearbeitet sind, vorgesehen. Auf diese Weise wird zwar dem Eindringen von Schmutz entgegengewirkt, die Länge der Stützflächen für die Spannbacken in dem Futterkörper wird dadurch aber in einem erheblichen Maße verkürzt. Bei hohen aufzubringenden Spannkräften werden die Spannbacken, da eine ausreichende Abstützung nicht gegeben ist, verformt, so dass diese Spannfutter für Arbeitsvorgänge, bei denen eine hohe Spannkraft erforderlich ist, nicht geeignet sind. Die Spannbacken können sich nämlich wegen der kurzen Stützbahnen aufbäumen, ein eingespanntes Werkzeug wird dadurch vom Werkstückanschlag abgedrückt und die Arbeitsgenauigkeit wird negativ beeinflusst. Vor allem ist aber von Nachteil, dass diese bekannten Kraftspannfutter nur als Vollspannfutter ausgeführt werden können, da eine weitere Verkürzung der Führungs- und Stützflächen und auch der Spann- oder Grundbacken nicht in Kauf zu nehmen ist. Ein sicheres Einspannen eines Werkstückes wäre aufgrund kurzer Führungs- und Stützflächen nicht gewährleistet.

Aufgabe der Erfindung ist es daher, ein Kraftspannfutter der vorgenannten Art in der Weise auszugestalten, dass die Spann- oder Grundbacken stets sicher in dem Futterkörper abgestützt sind und ein Aufbäumen nahezu ausgeschlossen ist und dass der Raum in den Führungsnuten, in denen die Spann- oder Grundbacken eingreifen, stets hermetisch abgedichtet ist, so dass auch nach langen Produktionszeiten die Führungs- und Stützflächen nicht verschmutzen. Dabei soll des Weiteren sichergestellt sein, dass die Führungs- und Stützflächen in ihrer Länge nicht verkürzt werden müssen, Verformungen der Grund- und Spannbacken sollen somit auch bei hohen zu übertragenden Spannkräften zuverlässig vermieden werden, und es soll eine lange Standzeit ohne Wartungsarbeiten ermöglicht werden.

Gemäß der Erfindung wird dies bei einem Kraftspannfutter der eingangs genannten Art dadurch erreicht, dass die Aufnahmenuten jeweils aus zwei parallel zu den Führungsnuten verlaufenden Teilabschnitten, einem diese verbindenden etwa senkrecht zu den Führungsnuten und auf gleicher Höhe mit den Teilabschnitten im Anschluss an den inneren Endbereich der Führungsnuten angeordneten Verbindungsstück sowie einem weiteren im Eingangsbereich der Führungsnuten vorgesehenen etwa U-förmig ausgebildeten der Formgebung der Führungsnut oder der Spann- oder Grundbacken angepassten Verbindungsstück zusammengesetzt sind, das etwa senkrecht zu den Teilabschnitten verlaufend und diese verbindend in den Futterkörper oder die Spann- oder Grundbacken eingearbeitet ist.

Angebracht ist es auch, die Spann- oder Grundbacken jeweils mit einem auf der Vorderseite des Futterkörpers an diesem anliegenden, seitlich nach außen abstehenden umlaufenden Ansatzstück zu versehen, das an der in den Futterkörper eingesetzten Dichtung anliegt oder in den die parallel zu den Führungsnuten verlaufenden Teilabschnitte der Aufnahmenuten sowie das dies verbindende im Anschluss an den inneren Endbereich der Führungsnuten vorgesehene Verbindungsstück eingearbeitet sind.

Die Führungsnuten und die Spann- oder Grundbacken sollte des Weiteren auf beiden Längsseiten jeweils mit einander zugeordneten Führungs- und Stützflächen versehen sein, wobei die Führungsnuten mit einander gegenüberliegend angeordnete Stützflächen und die Spann- oder Grundbacken mit mit diesen korrespondierenden vzw. durch Hinterschneidungen gebildete Gegenflächen versehen sein sollten.

Sehr zweckmäßig ist es hierbei, dass die in den Führungsnuten bzw. an den Spann- oder Grundbacken vorgesehenen Führungs- und/oder Stützflächen sich nahezu über die axiale Länge der Führungsnuten bzw. der Spannbacken erstrecken.

Die in den Futterkörper oder die Spann- oder Grundbacken eingearbeitete Aufnahmenuten können im Querschnitt U- oder etwa halbkreisförmig oder mehreckig ausgebildet sein und die Dichtungen können aus einem elastisch verformbaren Werkstoff, beispielsweise Gummi oder Kunststoff, bestehen und sollten an die Querschnittsform der Aufnahmenuten anpasst sein.

Wird ein Kraftspannfutter gemäß der Erfindung ausgebildet, in dem der Raum, in den die Spann- oder Grundbacken eingreifen, mittels einer umlaufenden Dichtung hermetisch abgedichtet wird, so ist zuverlässig die Gewähr gegeben, dass kein Schmutz oder Feuchtigkeit in diesen Bereich des Kraftspannfutters gelangen kann und dadurch die Funktion des Kraftspannfutters beeinträchtigt wird. Vielmehr ist das in dieser Weise ausgebildete Kraftspannfutter über einen langen Zeitraum einsatzfähig, unerwünschte Produktionsunterbrechungen sind demnach nicht in Kauf zu nehmen.

Durch die Ausbildung der umlaufenden Nuten und die in dieser eingesetzten Dichtungen werden des Weiteren die Führungs- und Stützflächen der Spann- und Grundbacken nicht ungünstig beeinflusst. Diese sind stets in einem ausreichenden Maße in den Führungsnuten abgestützt und geführt. Verkantungen der Spann- oder Grundbacken treten somit auch bei hohen auf diese einwirkenden Gegenkräfte nicht auf. Spannkraftverluste und dadurch bedingte Produktionsausfälle sind daher nicht in Kauf zu nehmen. Auch ist das vorschlagsgemäß ausgebildete Kraftspannfutter nahezu wartungsfrei. Die von den Dichtungen eingeschlossenen Räume können nämlich mit Fett oder Öl befüllt werden, so dass eine Dauerschmierung gegeben ist. Mit geringem konstruktivem Aufwand wird demnach ein Kraftspannfutter geschaffen, das bei langer Lebensdauer einen störungsfreien Einsatz bei gleichbleibend hoher Spanngenauigkeit ermöglicht und ohne dass durch Aufbäumen der Spannbacken, Spannkraftverluste in Kauf zu nehmen sind. Die sich nahezu über die gesamte radiale Länge der Führungsnuten erstreckenden Stütz- und Führungsflächen gewährleisten diese zufriedenstellende Funktionen, die allen Anforderungen der Praxis gerecht wird. Auch ermöglicht die vorgesehene Konstruktionen die Ausgestaltung eines Kraftspannfutters als Hohlspannfutter, so dass ein großer Anwendungsbereich gegeben ist.

In der Zeichnung ist ein Ausführungsbeispiel des gemäß der Erfindung ausgebildeten Kraftspannfutters in Form eines Keilhakenfutters dargestellt, das nachfolgend im Einzelnen näher erläutert ist. Hierbei zeigt:
- Figur 1: das Keilhakenfutter in perspektivischer Darstellung und teilweise im Schnitt,
- Figur 2: das Keilhakenfutter nach Figur 1, in Draufsicht, mit und ohne in den Führungsnuten eingesetzte Spannbacken,
- Figur 3: einen Schnitt nach der Linie III-III der Figur 1,
- Figur 4: eine bei dem Keilhakenfutter nach den Figuren 1 und 2 verwendete Spannbacken, in einer vergrößerten Wiedergabe und in perspektivischer Darstellung, sowie
- Figuren 5 und 6: jeweils einen Teilschnitt durch den Futterkörper des Kraftspannfutters nach Figur 1, mit in Aufnahmenuten eingesetzte Dichtungen.

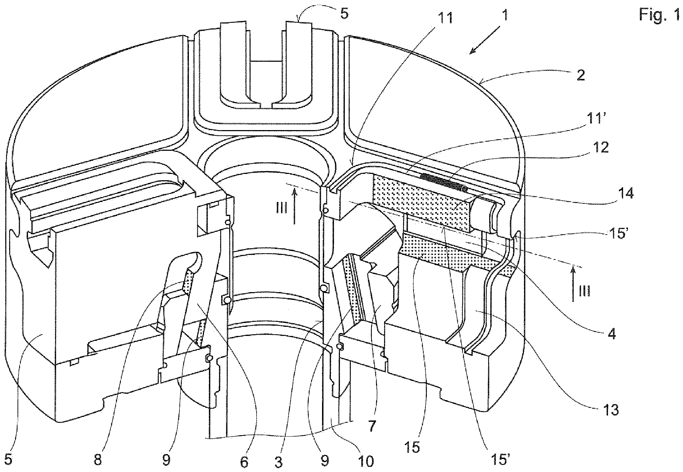

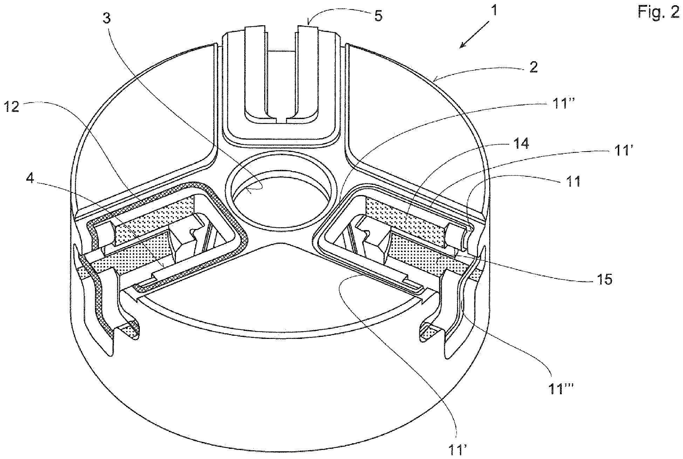

Das in den Figuren 1 und 2 dargestellte und jeweils mit 1 bezeichnete Kraftspannfutter ist als Keilhakenfutter ausgebildet und dient zur Halterung eines auf einer Drehmaschine zu bearbeitenden Werkstückes, das durch Spannbacken 5 gehalten wird. Die Spannbacken 5 sind hierbei in radial gerichteten in den Futterkörper 2 eingearbeiteten Führungsnuten 4 verschiebbar abgestützt. Durch an den Spannbacken 5 angeformte Keilhaken 6, die mit in Achsrichtung geneigten Schrägflächen 9 versehen sind, werden die axialen Verstellbewegungen eines mit einer Zugstange 10 verbundenen Verstellkolben 7 in radiale Zustellbewegungen umgewandelt. An dem Verstellkolben 7 vorgesehene Schrägflächen 8 wirken dazu mit den an dem Keilhaken 6 angearbeiteten Schrägflächen 8 zusammen.

Um zuverlässig auszuschließen, dass in die Räume 13, in denen die Spannbacken 5 in den Futterkörper 4 eingreifen, beim Einsatz des Kraftspannfutters 1 keine Späne, Staub, Feuchtigkeit oder sonstige Verunreinigungen eindringen können, sind die Räume 13 abgedichtet. Um dies zu bewerkstelligen, sind in den Futterkörper 2 im Bereich der Führungsnuten 4 umlaufende Führungsnuten 11 eingearbeitet, in die endlose Dichtungen 12 eingesetzt sind. Durch die Dichtungen 12 sind die Räume 13 hermetisch verschlossen, durch Verschmutzungen bedingte Produktionsausfälle sowie Spannkraftminderungen treten demnach nicht auf.

Die Aufnahmenuten 11 der Dichtungen 12 sind jeweils, wie dies der Figur 2, linke Hälfte, zu entnehmen ist, aus zwei zu den Führungsnuten 4 verlaufenden Teilabschnitten 11', einem dieser auf gleicher Höhe mit diesem verlaufenden und im Anschluss an den inneren Endbereich der Führungsnuten 4 angeordneten Verbindungsstück 11" und einem weiteren Verbindungsstück 11"', das im Eingangsbereich der Führungsnut 4 vorgesehen und U-förmig der Form der Grundbacke 5 angepasst, ausgebildet ist, zusammengesetzt. Auf diese Weise ist es mit geringem Fertigungsaufwand möglich, die Führungsnuten 4 in den Futterkörper 2 einzuarbeiten, ohne dass die Führungsflächen 14 sowie die Stützflächen 15 und 15' des Futterkörpers 2, die in den Figuren 1 und 2 durch Punktierungen hervorgehoben sind, verkürzt werden müssen, obwohl das Kraftspannfutter 1 mit einer Durchgangsbohrung 3 zur Aufnahme von zu bearbeitenden stangenförmigen Werkstücken ausgestattet und somit als Hohlspannfutter ausgebildet ist.

Die an den Spannbacken 5 vorgesehenen Führungsflächen 15, 15' und Stützflächen 17, die durch Hinterschneidungen 18 gebildet sind, stehen somit ausreichende Anlageflächen als Gegenflächen zur Verfügung. Verkantungen der Spannhaken 5 bei Arbeitsvorgängen, die zu Produktionsfehlern führen können, sind auf diese nahezu ausgeschlossen. Und da die Aufnahmeräume 13 mit Fließfett oder einem Ölbad befüllt werden können, ist eine Dauerschmierung geschaffen, Wartungsarbeiten entfallen demnach.

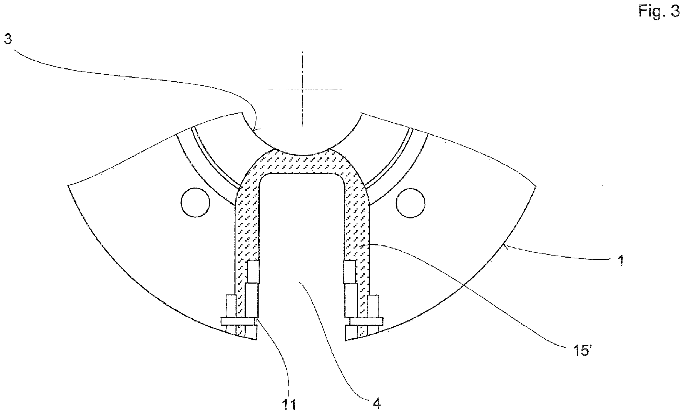

Die an dem Futterkörper 1 angearbeiteten Stützflächen 15 und 15' erstrecken sich, wie dies insbesondere der Darstellung nach Figur 3 zu entnehmen ist, über die gesamte radiale Länge der Führungsnuten 4 bis in Höhe der Außenmantelfläche des Futterkörpers 1. Auf diese Weise ist stets eine sichere Abstützung der Spann- oder Grundbacken 5 gewährleistet, so dass hohe Spannkräfte, ohne dass ein Aufbäumen der Spann- oder Grundbacken zu befürchten ist, übertragen werden können und das Kraftspannfutter 1 auch als Hohlspannfutter mit einer Durchgangsbohrung 3 zur Bearbeitung stangenförmiger Werkstücke ausgebildet werden kann.

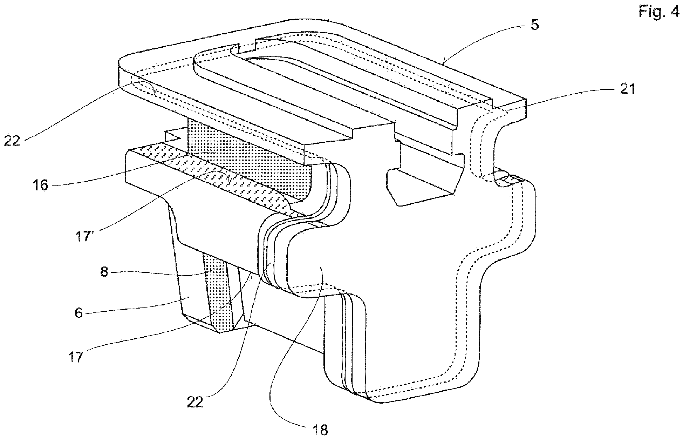

Gemäß Figur 4 sind die Spannbacken 5 mit einem auf der Vorderseite des Futterkörpers 2 an diesem anliegenden seitlich nach außen abstehenden Ansatzstück 21 versehen, in denen alternativ jeweils ein Teil der Aufnahmenut 22 zur Halterung einer endlosen Dichtung eingearbeitet werden kann.

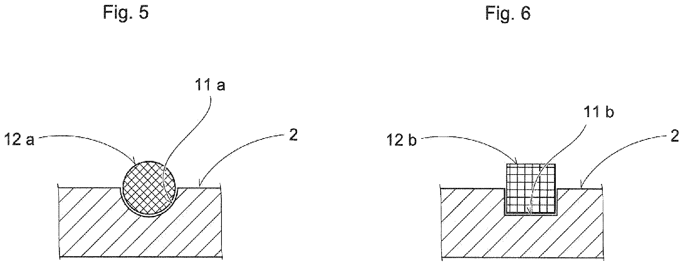

Gemäß den Figuren 5 und 6 können Aufnahmenuten 11a und 11b für Dichtungen 12a bzw. 12b im Querschnitt halbkreisförmig oder rechteckig gegebenenfalls auch mehreckig und oval ausgebildet sein, in die die im Querschnitt an die Querschnittsform der Aufnahmenuten 11a bzw. 11b angepassten Dichtungen 12a bzw. 12b aus Gummi oder Kunststoff eingesetzt sein.

## Patentansprüche

1. Kraftspannfutter (1) mit in einen Futterkörper (2) in radial gerichteten Führungsnuten (4) verschiebbar eingesetzte Spann- oder Grundbacken (5), die über Keilhaken (6) oder Keilstangen durch einen z.B. mit einer axial verschiebbaren Zugstange (10) verbundenen Verstellkolben (7) betätigbar sind, wobei der Futterkörper (2) des Kraftspannfutters (1) im Bereich der Führungsnuten (4) oder die Spann- oder Grundbacken (5) in den an die Führungsnuten (4) angrenzen Bereichen jeweils mit einer umlaufenden Aufnahmenut (11, 22) versehen sind und in die Aufnahmenuten (11, 22) je eine endlos ausgebildete Dichtung (12, 22) eingesetzt ist, derart, dass von dieser ein Aufnahmeraum (13) eingeschlossen ist,
**dadurch gekennzeichnet,**
**dass** die Aufnahmenuten (11, 21) jeweils aus zwei parallel zu den Führungsnuten (4) verlaufenden Teilabschnitten (11'), einem diese verbindenden etwa senkrecht zu den Führungsnuten (4) und auf gleicher Höhe mit den Teilabschnitten (11') im Anschluss an den inneren Endbereich der Führungsnuten (4) angeordneten Verbindungsstück (11") sowie einem weiteren im Eingangsbereich der Führungsnuten (4) vorgesehenen etwa U-förmig ausgebildeten der Formgebung der Führungsnut (4) oder der Spann- oder Grundbacken (5) angepassten Verbindungsstück (11'") zusammengesetzt sind, das etwa senkrecht zu den Teilabschnitten (11') verlaufend und diese verbindend in den Futterkörper (4) oder die Spann- oder Grundbacken (5) eingearbeitet ist.

2. Kraftspannfutter nach Anspruch 1,
**dadurch gekennzeichnet,**
**dass** die Spann- oder Grundbacken (5) jeweils mit einem auf der Vorderseite des Futterkörpers (2) an diesem anliegenden, seitlich nach außen abstehenden umlaufenden Ansatzstück (21) versehen sind, das an der in den Futterkörper (2) eingesetzten Dichtung (12, 22) anliegt oder in den die parallel zu den Führungsnuten (4) verlaufenden Teilabschnitte (11') der Aufnahmenuten (11') sowie das dies verbindende im Anschluss an den inneren Endbereich der Führungsnuten (4) vorgesehene Verbindungsstück (11") eingearbeitet sind.

3. Kraftspannfutter nach Anspruch 1 oder 2,
**dadurch gekennzeichnet,**
**dass** die Führungsnuten (4) und die Spann- oder Grundbacken (5) auf beiden Längsseiten jeweils mit einander zugeordneten Führungs- und Stützflächen (14 bzw. 15, 15' sowie 16 bzw. 17, 17') versehen sind.

4. Kraftspannfutter nach einem oder mehreren der Ansprüche 1 bis 3,
**dadurch gekennzeichnet,**
**dass** die Führungsnuten (4) mit einander gegenüberliegend angeordnete Stützflächen (15, 15') und die Spann- oder Grundbacken (5) mit mit diesen korrespondierenden vzw. durch Hinterschneidungen (18) gebildete Gegenflächen (17, 17') versehen sind.

5. Kraftspannfutter nach Anspruch 3 oder 4,
**dadurch gekennzeichnet,**
**dass** die in dem Futterkörper (4) bzw. an den Spann- oder Grundbacken (5) vorgesehenen Führungs- und/oder Stützflächen (14, 15, 15', 16, 17, 17') sich nahezu über die axiale Länge der Führungsnuten (4) bzw. der Spann- oder Grundbacken (5) erstrecken.

6. Kraftspannfutter nach einem oder mehreren der Ansprüche 1 bis 5,
**dadurch gekennzeichnet,**
**dass** die in den Futterkörper (2) oder die Spann- oder Grundbacken (5) eingearbeiteten Aufnahmenuten (11, 22) im Querschnitt U- oder etwa halbkreisförmig bzw. mehreckig ausgebildet und dass die Dichtungen (12, 22) an die Querschnittsform der Aufnahmenuten (11, 21) anpasst sind.

7. Kraftspannfutter nach einem oder mehreren der Ansprüche 1 bis 6,
**dadurch gekennzeichnet,**
**dass** die Dichtungen (12, 22) aus einem elastisch verformbaren Werkstoff, beispielsweise Gummi oder Kunststoff, bestehen.

## Claims

1. A power chuck (1) with clamping or base jaws (5) inserted in a movable arrangement in a chuck body (2) in radially aligned guide grooves (4), in which the clamping or base jaws (5) can be actuated via wedge hooks (6) or wedge rods by means of an adjustment piston (7) connected for example to an axially moveable pull road (10), in which a circumferential accommodating groove (11, 22) is provided in the chuck body (2) of the power chuck (1) in the area of the guide grooves (4) or in the clamping or base jaws (5) in the areas adjacent to the guide grooves (4) in each case and each of the accommodating grooves (11, 22) has an endless seal (12, 22) inserted in it, in such a way that it encloses an accommodating space (13),
**characterized in that**,
each of the accommodating grooves (11, 21) is composed of two subsections (11') running parallel to the guide grooves (4), a connecting piece (11") connecting them together and arranged approximately perpendicular to the guide grooves (4) and at the same height as the subsections (11') following on from the inner end area of the guide grooves (4) as well as another connecting piece (11"') provided in the entrance area of the guide grooves (4) configured in a U shape and adapted to the shape of the guide groove (4) or to the clamping or base jaws (5), in which the connecting piece running approximately perpendicular to the subsections (11') and connecting them is worked into the chuck body (4) or the clamping or base jaws (5).

2. The power chuck in accordance with Claim 1,
**characterized in that**
the clamping or base jaws (5) are each provided with a circumferential extension (21) projecting laterally outwards on the front side of the chuck body (2) and in contact with it, in which the extension (21) is in contact with the seal (12, 22) inserted in the chuck body (2) or is worked into the subsections (11') of the accommodating grooves (11') running parallel to the guide grooves (4) as well as the connecting piece (11") which connects this and is provided following on from the inner end area of the guide grooves (4).

3. The power chuck in accordance with Claim 1 or 2,
**characterized in that**
the guide grooves (4) and the clamping or base jaws (5) are each provided with guide and support surfaces (14 or 15, 15' as well as 16 or 17, 17') assigned to one another on both longitudinal sides.

4. The power chuck in accordance with one or more of Claims 1 to 3,
**characterized in that**
the guide grooves (4) are provided with support surfaces (15, 15') arranged opposite to one another and the clamping or base jaws (5)are provided with counter surfaces (17, 17') corresponding to the clamping or base jaws (5) or formed by means of undercuts (18).

5. The power chuck in accordance with Claims 3 or 4,
**characterized in that**
the guide and/or support surfaces (14, 15, 15' 16, 17, 17') provided in the chuck body (4) or on the clamping or base jaws (5) extend almost along the axial length of the guide grooves (4) or the clamping or base jaws (5).

6. The power chuck in accordance with one or more of Claims 1 tor 5,
**characterized in that**
the accommodating grooves (11, 22) worked into the chuck body (2) or the clamping or base jaws (5) have a U-shaped or approximately semicircular or polygonal cross section and that the seals (12, 22) are adapted to the cross-sectional shape of the accommodating grooves (11, 21).

7. The power chuck in accordance with one or more of Claims 1 tor 6,
**characterized in that**
the seals (12, 22) are made of an elastically deformable material such as rubber or polymer.

## Revendications

1. Mandrin de serrage motorisé (1) avec des mors de serrage ou des mors de base (5), montés de manière mobile dans des gorges de guidage radiales (4) d'un corps de mandrin (2), les mors se laissant actionner par l'intermédiaire de crochets (6) ou de crémaillères par un piston de réglage (7) raccordé p. ex. à une tige de traction axialement mobile (10), où une gorge de réception circulaire (11, 22) est prévue au niveau des gorges de guidage radiales (4) sur le corps du mandrin (2) du mandrin de serrage motorisé (1) ou aux endroits avoisinant les gorges de guidage (4) sur les mors de serrage ou les mors de base (5), et où il est monté dans les gorges de réception respectives (11, 22) un joint continu (12, 22) formant une chambre de réception (13),
**caractérisé en ce que**
les gorges de réception respectives (11, 21) sont composées de deux sections partielles (11') parallèles aux gorges de guidage (4), et, pour les raccorder, d'une pièce de raccordement (11") perpendiculaire aux gorges de guidage (4) et disposée au même niveau que les sections partielles (11') suite à l'extrémité intérieure des gorges de guidage (4), et d'une autre pièce de raccordement (11"') ayant à peu près la forme d'un U, prévue à l'endroit de l'entrée des gorges de guidage (4), et étant adaptée à la forme de la gorge de guidage (4) ou des mors de serrage ou des mors de base (5), celle-ci s'étendant à peu près perpendiculaire aux sections partielles (11') et étant insérée dans le corps du mandrin (2) ou dans les mors de serrage ou dans les mors de base (5) de manière à raccorder celles-ci.

2. Mandrin de serrage motorisé d'après la revendication 1,
**caractérisé en ce que**
les mors de serrage ou les mors de base (5) comportent respectivement un embout circulaire (21) sur la face avant du corps du mandrin (2), portant sur celui-ci et saillant latéralement vers l'extérieur, qui porte sur le joint (12, 22) inséré dans le corps du mandrin (2) ou qui est pratiqué dans les sections partielles (11') des gorges de réception (11') parallèles aux gorges de guidage (4) et dans la pièce de raccordement (11") prévue à l'extrémité intérieure des gorges de guidage (4) et raccordant celles-ci.

3. Mandrin de serrage motorisé d'après les revendications 1 ou 2,
**caractérisé en ce que**
les deux côtés longitudinaux des gorges de guidage (4) et des mors de serrage ou des mors de base (5) comportent respectivement des faces de guidage et d'appui assignées l'une à l'autre (14 ou 15, 15' et 16 ou 17, 17').

4. Mandrin de serrage motorisé d'après une ou plusieurs des revendications 1 à 3,
**caractérisé en ce que**
les gorges de guidage (4) comportent des faces d'appui opposées (15, 15') et que les mors de serrage ou les mors de base (5) comportent des contre-faces (17, 17') correspondant à celles-ci ou formées par des contre-dépouilles (18).

5. Mandrin de serrage motorisé d'après les revendications 3 ou 4,
**caractérisé en ce que**
les faces de guidage et/ou d'appui (14, 15, 15', 16, 17, 17') prévues sur le corps du mandrin (2) ou sur les mors de serrage ou les mors de base (5) s'étendent sur presque toute la longueur axiale des gorges de guidage (4) ou des mors de serrage ou des mors de base (5).

6. Mandrin de serrage motorisé d'après une ou plusieurs des revendications 1 à 5,
**caractérisé en ce que**
la coupe transversale des gorges de réception (11, 22) pratiquées dans le corps du mandrin (2) ou dans les mors de serrage ou les mors de base (5) a la forme d'un U ou à peu près demi-circulaire ou polygonale, et que les joints (12, 22) sont adaptés à la forme de la coupe transversale des gorges de réception (11, 22).

7. Mandrin de serrage motorisé d'après une ou plusieurs des revendications 1 à 6,
**caractérisé en ce que**
les joints (12, 22) sont réalisés en un matériau élastique déformable tel que du caoutchouc ou de la matière synthétique.
